# EUROPÄISCHE PATENTSCHRIFT

(11) **EP 4 366 548 B1**
(45) Veröffentlichungstag und Bekanntmachung des Hinweises auf die Patenterteilung: **26.03.2025**
(21) Anmeldenummer: 22757826.7
(22) Anmeldetag: 05.08.2022
(51) Int. Cl.: A23L 19/18

(54) **VERFAHREN ZUR HERSTELLUNG EINES KARTOFFELFORMTEILS UND KARTOFFELFORMTEIL**
METHOD FOR PRODUCING A MOLDED POTATO PRODUCT, AND MOLDED POTATO PRODUCT
PROCÉDÉ DE PRODUCTION D'UN PRODUIT MOULÉ À BASE DE POMME DE TERRE ET PRODUIT MOULÉ À BASE DE POMME DE TERRE

(30) Priorität: 05.08.2021 DE 102021120408
(43) Veröffentlichungstag der Anmeldung: 15.05.2024
(73) Patentinhaber: Schade, Matthias, 99867 Gotha-Boilstädt (DE)
(72) Erfinder: Schade, Matthias, 99867 Gotha-Boilstädt (DE)
(74) Vertreter: Völger, Karl Wolfgang
(86) Internationale Anmeldenummer: PCT/DE2022/100567
(87) Internationale Veröffentlichungsnummer: WO 2023/011692

(56) Entgegenhaltungen:
- DE-A1- 102017 121 601
- GB-A- 677 322
- JP-A- H1 118 713
- US-A- 3 968 265
- DATABASE GNPD [online] MINTEL; 15 January 2021 (2021-01-15), ANONYMOUS: "Pre-Fried Dauphine Potatoes", XP055970262, retrieved from https://www.gnpd.com/sinatra/recordpage/8410915/ Database accession no. 8410915
- DATABASE GNPD [online] MINTEL; 3 November 2020 (2020-11-03), ANONYMOUS: "Real Dauphine Potato", XP055970285, retrieved from https://www.gnpd.com/sinatra/recordpage/8235449/ Database accession no. 8235449
- DATABASE GNPD [online] MINTEL; 29 June 2018 (2018-06-29), ANONYMOUS: "Alphabet Fries", XP055970297, retrieved from https://www.gnpd.com/sinatra/recordpage/5781633/ Database accession no. 5781633
- DATABASE GNPD [online] MINTEL; 31 October 2013 (2013-10-31), ANONYMOUS: "Halloween Potato Shapes", XP055970313, retrieved from https://www.gnpd.com/sinatra/recordpage/2234283/ Database accession no. 2234283

## Beschreibung

Die Erfindung betrifft ein Verfahren zur Herstellung eines Kartoffelformteils.

Der Kloß (Plural: die Klöße) oder der Knödel (Plural: die Knödel) ist eine aus Teig hergestellte Speise, die als Hauptspeise, Beilage oder Suppeneinlage gegessen wird. Klöße und Knödel bezeichnen eigentlich die gleichen Beilagen (in Süddeutschland vor allem die Bezeichnung Knödel). Runde Formen werden Klöße genannt, andere Formen Knödel.

Eingefrorene, teilweise vor-frittierte, Kartoffelprodukte sind im Lebensmittelhandel erhältlich (Database GNPD [Online] MINTEL: (a) 15. Januar 2021, "Pre-Fried Dauphine Potatoes, XP55970262; Database Acc. No. 8410915; (b) 3. November 2020, "Real Dauphine Potatoes", XP055970285, Database Acc. No. 8235449; (c) 29. Juni 2018, "Alphabet Fries", XP055970297, Database Acc. No. 5781633; (d) 31. Oktober 2013, "Halloween Potato Shapes", XP055970313, Database Acc. No. 2234283).

JPH11018713 A1 betrifft ein Verfahren, um Klöße aus Kartoffeln oder Kürbis. Das Verfahren umfasst das Abschälen der Schale von Kürbis oder Kartoffel, das Mischen des geschälten Kürbis oder der Kartoffel mit Kartoffelstärke und Maisstärke als Hilfsmaterialien, das Rühren, das gleichmäßige Mischen, das Zuführen der Mischung in eine Formmaschine, nachdem die Mischung viskos geworden ist, das Formen der Mischung in eine feste, leicht essbare Form, das Einführen des geformten Materials in einen Erhitzer, das Erhitzen, das Stoppen des Erhitzens, das Abkühlen des erhitzten Materials auf etwa ≤20 Grad Celsius und das Gefrieren des Materials, um das Zielprodukt zu erhalten.

Stärke kann unter Hitzeeinwirkung ein Vielfaches ihres Eigengewichtes an Wasser physikalisch binden, aufquellen und verkleistern. Beim Erhitzen mit Wasser quillt die Stärke bei 47-57 °C, die Schichten platzen, und bei 55-87 °C (Kartoffelstärke bei 62,5 °C, Weizenstärke bei 67,5 °C) entsteht Stärkekleister, welcher je nach der Stärkesorte verschiedenes Steifungsvermögen besitzt (Maisstärkekleister größeres als Weizenstärkekleister, dieser größeres als Kartoffelstärkekleister). Es entsteht eine gelatineartige Masse.

Bei kühlen Temperaturen bildet sich dieser Effekt langsam wieder zurück und das Wasser wird wieder abgegeben - man spricht von Retrogradation.

Bei der Zubereitung von Kartoffelklößen wird die stärkeaufweisende Kloßteigmasse im Wasserbad je nach Kloßgröße mehrere Minuten lang erhitzt. Dabei nimmt der Kloß unkontrolliert Wasser auf. Wenn im Innern die Verkleisterung noch nicht eingesetzt hat, kann außen bereits eine derart starke Aufquellung der Außenhaut stattgefunden haben, dass der Kloß eine unangenehme Gallertschicht aufweist. Würde man einen solchen Kloß konservieren wollen, würde aufgrund des hohen Wassergehalts bei der Konservierung, beispielsweise durch Kühlung, die Konsistenz des Kloßes verloren gehen.

Bislang können verkleisterte Kloßteige nicht "wiederbelebt" werden, das heißt, Klöße, die bereits gegart wurden, können nur unter erheblichen Qualitätseinbußen wieder erwärmt werden.

Um die heimische Herstellung zu erleichtern, werden daher bislang Kloßrohmassen bereitgestellt, in denen die Stärke unverkleistert vorliegt. Solche lassen sich aufgrund fehlender strukturgebender Substanzen jedoch nicht dauerhaft ausformen. Vielmehr wäre eine Ausformung nicht dauerhaft. Dies führt jedoch dazu, dass zum einen die Ausformung des Kloßes und zum anderen der komplette Garvorgang zeitaufwändig selbst ausgeführt werden müssen.

Aufgabe der Erfindung ist es nun, die Probleme des Stands der Technik zu beseitigen oder zumindest zu reduzieren. Insbesondere soll ein Kloßformteil bereitgestellt werden, welches vorgegart und ohne Qualitätseinbußen bei Erhaltung seiner Form wiederbelebbar ist.

Dabei wird unter "wiederbelebbar" verstanden, dass das Kartoffelformteil in der Art erhitzt werden kann, dass anschließend eine lockere Konsistenz und Geschmack erzielt werden, die einem herkömmlich zubereitetem Kloß ähnlich sind.

Diese Aufgabe wird durch ein Verfahren mit den Merkmalen der unabhängigen Ansprüche gelöst.

Somit betrifft ein erster Aspekt der Erfindung ein Verfahren zur Herstellung eines Kartoffelformteils gemäß Patentanspruch 1. Vorteilhafte Ausgestaltungen sind Gegenstände der abhängigen Ansprüche.

Das erfindungsgemäße Verfahren zeichnet sich durch folgende Schritte aus:
a) Bereitstellen einer Kartoffelrohmasse, aufweisend alle Teile von rohen, geschälten und zerkleinerten Kartoffeln und/oder eines technisch bereiteten Äquivalents ausgewählt aus Kartoffelmehl, Stärkemehl, Kartoffelfasern oder getrocknetem Kartoffelpüree,
b) Bereitstellen einer Kartoffelmasse, umfassend gekochte, geschälte und zerkleinerte Kartoffeln und/oder eines technisch bereiteten Äquivalents ausgewählt aus Kartoffelmehl, Stärkemehl, Kartoffelfasern oder getrocknetem Kartoffelpüree,
c) Vermengen der beiden Massen zu einer Mischung,
d) Kühlen der Mischung auf eine Temperatur von 4 - 15°C,
e) Ausformen eines Formteils aus der gekühlten Mischung,
f) thermisches Behandeln des Formteils mittels eines Heißdampfverfahrens zum Erreichen einer Kerntemperatur im Formteil von mindestens 65°C, wodurch eine Verkleisterung von Kartoffelstärkebestandteilen erreicht wird, so dass ein Wassergehalt im Formteil nach der thermischen Behandlung abnimmt und ein Rohling entsteht.

Zunächst wird eine Kartoffelrohmasse bereitgestellt, aufweisend alle Teile von rohen, geschälten und zerkleinerten Kartoffeln und/oder eines technisch bereiteten Äquivalents. Die Zerkleinerung findet dabei insbesondere in der Art statt, dass Kartoffelfasern in der Masse verbleiben, vorzugsweise durch Reiben oder Raspeln.

Des Weiteren wird eine Kartoffelmasse bereitgestellt, die gekochte, geschälte und zerkleinerte Kartoffeln und/oder ein technisch bereitetes Äquivalent hiervon umfasst. Hierbei wird als Zerkleinerung vorzugsweise durch Stampfen oder Quetschen gewählt. Dabei ist es weiter vorteilhaft, wenn die Zellen nicht zerstört werden, so dass die Kartoffelstärke in den Zellen verbleibt, um eine ungewollte Verkleisterung zu verhindern. Daher ist pürieren, beispielsweise mit einem rotierenden Schneidmesser oder Rührstab, weniger bevorzugt.

Anschließend werden die beiden Massen zu einer Mischung vermengt. Optional können weitere Bestandteile wie Kartoffelmehl, Gewürze, Mehl, Eier und/oder Milch der Mischung beigefügt werden.

Vor dem Ausformen der Masse zu einem Formteil wird die Mischung auf eine Temperatur im Bereich von 4 bis 15°C herunter gekühlt. Dies ermöglicht das Ausformen des Formteils in einer sehr präzisen Form. Das Ausformen erfolgt bevorzugt mittels Pressens der Mischung in eine Negativform. Bei Herstellung großer Stückzahlen wird das industriell zugängliche Formen mittels Formplattenmaschine oder Trommelformmaschine bevorzugt.

Erfindungsgemäß wird die ausgeformte Masse anschließend thermisch behandelt, um Stärkebestandteile in der Mischung zu verkleistern, wobei die thermische Behandlung derart erfolgt, dass ein Wassergehalt im Formteil nach der thermischen Behandlung abnimmt.

Dies sorgt dafür, dass ein Rohling entsteht, welcher eine gummiartige Konsistenz aufweist. Die Konsistenz entsteht durch die Verkleisterung der Stärke, welche zu einer Verbindung und Netzbildung benachbarter Teilchen führt. Da jedoch kein zusätzliches Wasser von der Mischung aufgenommen werden konnte, ist der Rohling im Vergleich zu herkömmlichen gegarten Klößen nicht mit einer gelartigen Schicht versehen. Zudem erfolgt eine auf den Das führt wiederum dazu, dass die Form des Formteils nahezu identisch mit dem des Rohlings ist. Somit sind eine Vielzahl von neuen Formen für Kartoffelformteile zugänglich, die insbesondere von denen eines normalen runden Kloßes, aber auch von den bekannten Herzoginnenkartoffeln, Kroketten und dergleichen abweichen.

Darüber hinaus induziert die homogene und nahezu vollständige Verkleisterung einen Abbau von verdaulicher Stärke im Rohling. Es hat sich gezeigt, dass die erfindungsgemäße Verkleisterung zu einem erhöhten Anteil von Ballaststoffen und reduzierten Anteil an verwertbaren Kohlehydraten im verzehrfertigen Endprodukt führt.

Vorteilhafterweise weist das erfindungsgemäße Formteil eine erhöhte Haltbarkeit auf. So wurde gutachterlich bestätigt, dass bei Verpackung des Formteils ohne Sauerstoffausschluss keine Tiefkühlung notwendig ist, um eine Haltbarkeit von 3 und sogar 6 Monaten sicherstellen zu können. Vielmehr genügt eine normale Kühlung. Das Formteil ist somit durch das erfindungsgemäße Herstellungsverfahren derart konserviert, dass keine chemische oder andere Konservierung erforderlich ist. Ferner werden an den Transport keine erhöhten Anforderungen gestellt, wie beispielsweise das lückenlose Einhalten einer (Tief-)Kühlkette.

Mit Vorteil erfolgt das thermische Behandeln mittels eines Heißdampfverfahrens, insbesondere mittels eines Kombidämpfers oder Spiralkochers.

Ein Kombidämpfer, Spiralkocher oder auch Heißluftdämpfer vereinigt die Funktionen eines Dämpfers, in dem Gargut in gesättigter Dampfatmosphäre gegart wird, und eines Heißluftofens, bei dem das Garen mit Umluft erfolgt. Da bei den Geräten Temperatur und Feuchte über einen weiten Bereich veränderbar sind, erlauben sie eine volle Steuerung beziehungsweise Regelung des Garklimas in einem weiten Bereich. Außerdem kann aufgrund der verhältnismäßig hohen Umluftgeschwindigkeit des Lüfters und der Kondensation des Dampfes auf dem Gargut eine vergleichsweise kurze Gardauer und somit schonende Zubereitung der Lebensmittel erzielt werden.

Aufgrund des Dampfgehalts bei der Verwendung eines Kombidämpfers oder Spiralkochers im erfindungsgemäßen Verfahren findet eine geringe Wasserabgabe aus der Masse des Formteils, ca. 2% statt. Um auch eine Wasseraufnahme möglichst zu vermeiden, wird die Garzeit möglichst kurz gehalten und die Wassersättigung zwischen 60% und 80% eigestellt. Es zeigte sich, dass eine Dämpfungsdauer in einem Temperaturbereich von 115° bis 145°, insbesondere von 120° bis 140° für 75 bis 100s, insbesondere für 85 bis 95s bei einem 1cm starken Formteil eine ausreichende Verkleisterung bei weitestgehend konstantem Wassergehalt in der Masse des Formteils bewirkt.

Durch den zugeführten Wasserdampf bleibt die Austrocknung und Erhärtung des verkleisterten Rohlings aus. Ein Wasserverlust mit resultierender Verfestigung wird bei dieser Ausführungsform im Zuge eines anschließenden Auskühlvorganges (Gewichtsverlust ca. 6%) erreicht.

Erfolgt die Ausformung mittels formgebender Negativform, verbleibt das Formteil während des Garens im Kombidämpfer wahlweise in dieser Negativform. Bevorzugt werden dann jedoch die Garzeiten und/oder die Temperaturen angepasst, insbesondere erhöht, da das Material der Negativform aufgrund der inhärenten Wärmeleiteigenschaften den Garvorgang beeinflusst. Beispielsweise erfordert die Verwendung einer Silikonform als Negativform bei gleicher Temperatur eine Verdopplung der Garzeit im Kombidämpfer.

Insbesondere bei Verwendung von industriellen Äquivalenten kann auf einen Anteil ungegarter Kartoffeln in der Masse verzichtet werden. Dieser liefert im Wesentlichen die Kartoffelfasern, die für die Ausbildung netzartig verzweigter Strukturen zur Stabilisierung erforderlich sind.

Unter industriell hergestellten Äquivalenten sind vorliegend haltbar gemachte Extrakte von Kartoffeln, wie beispielsweise Kartoffel- beziehungsweise Stärkemehl, Kartoffelfasern oder getrocknetes Kartoffelpüree zu verstehen.

In bevorzugter Ausgestaltung des erfindungsgemäßen Verfahrens ist vorgesehen, dass die Kartoffelrohmasse einen Anteil im Bereich von 10 bis 75%, bevorzugt im Bereich von 10 bis 55%, insbesondere im Bereich von 20 bis 50% an der Mischung aufweist. Bei Frischware ist dies in erster Linie von der Kartoffelsorte abhängig, da insbesondere der Stärke- und Wasseranteil sowie die Stärkezusammensetzung sortenabhängig variieren. Naturgemäß ist dies bei industriell hergestellten Äquivalenten berechenbarer.

Mit besonderem Vorteil wird der Rohling, insbesondere durch Kühlung, Tiefkühlung, Vakuumverpackung und/oder Ähnlichem haltbargemacht und zwischengelagert.

Vor dem Verzehr ist eine "Wiederbelebung" des Rohlings erforderlich. "Wiederbelebung" bedeutet, dass das Kartoffelformteil in der Art erhitzt werden kann, dass anschließend eine lockere Konsistenz und Geschmack erzielt werden, die einem herkömmlich zubereitetem Kloß ähnlich sind.

Die Wiederlebung erfolgt bevorzugt in einem weiteren Verfahrensschritt, welchem der Rohling mittels Wärmeeinwirkung, insbesondere mittels Frittierens, Backens, Toastens oder im heißen Wasserbad wiederbelebt wird. Je nach Wahl des Verfahrens wird ein Kloß erzielt, der eine zarte Außenseite und eine lockere Konsistenz aufweist (Kombination aus Kombidämpfer zur Rohlingherstellung und Wasserbad zum Wiederbeleben) oder ein solcher mit feiner Kruste und lockerer Konsistenz im Inneren.

Weiter bevorzugt erfolgt die Wärmeeinwirkung beim Wiederbeleben je nach ausgewähltem Verfahren für einen Zeitraum von 1,5 bis 10 min. Hierbei liegt die bevorzugte Zeitdauer beim Frittieren im Bereich von 1,5 bis 5min, insbesondere im Bereich von 2 bis 3min.

Mit Vorteil weist das Formteil eine Dicke im Bereich von 1 bis 5 cm auf. Es hat sich gezeigt, dass insbesondere bei den angegebenen Temperaturen und Zeitdauern bezüglich der Homogenität und des Garergebnisses optimierte Kartoffelformteile erreicht werden. Naturgemäß sind für dünnere Formteile eher die unteren in Bezug auf Garzeit und/oder Temperatur eher die unteren Grenzen auszuwählen und bei stärkeren Formteilen *vice versa.*

Mit Vorteil wird das Formteil und/oder der Rohling vor der Weiterverarbeitung bemehlt. Dies stabilisiert zum einen den Wasserhaushalt, verhindert weiter ein ohnehin im Vergleich zu herkömmlichen Verfahren sehr reduziertes Anhaften der Formteile beziehungsweise Rohlinge aneinander und fördert bei Wärmeeinwirkung ohne Wasser oder Wasserdampf die Ausbildung einer Kruste in der gewünschten Konsistenz. Die Ausbildung der Kruste kann mit der Art der Bemehlung, insbesondere mit Grobheit, Verteilung und Zusammensetzung des Mehls beziehungsweise Kartoffelmehls beeinflusst beziehungsweise gesteuert werden.

In bevorzugter Ausgestaltung weist dabei das erfindungsgemäß hergestellte Kartoffelformteil eine ringförmige oder tierförmige, herzförmige, sternförmige etc. Grundform mit einer maximalen Stärke, beziehungsweise Höhe von 5 cm, insbesondere von 3 cm auf. Die ringförmigen, auch als Kloßdonut bezeichneten Kartoffelformteile zeigen bevorzugt einen äußeren Durchmesser von 7 bis 10 cm, insbesondere von 8 cm, wobei ein Innendurchmesser einer Durchgangsöffnung 1,5 bis 3 cm groß ist.

Alternativ weist das Kartoffelformteil die Form einer Schale mit einer homogenen oder inhomogenen Wandstärke von 1 bis 3 cm auf.

Die beschriebenen Ausführungsformen sind, soweit im Einzelfall nicht explizit genannt, mit Vorteil miteinander kombinierbar.

Im Folgenden wird die Erfindung anhand von Beispielen näher beschrieben.

### Beispiel 1: Herstellung eines Rohlings aus 90g Kartoffelmasse und in Form eines Donuts (Außendurchmesser = 8,5 cm/ Massequerschnitt = 2,5 cm)

### Herstellungsverfahren für den Frittiervorgang (Vergleich)

Die Kartoffelmasse wird in der nötigen Konsistenz hergestellt.

Die Kartoffelmasse wird gekühlt verarbeitet.

Die Kartoffelmasse wird in eine (Donut-)Form gepresst.

Die Kartoffelmasse wird der Form entnommen.

Der gepresste Rohling wird in eine Fritteuse gegeben.

Die Öltemperatur sollte zwischen 150°C und 160°C liegen.

Nach Erreichen einer knusprigen Oberfläche und einer Mindesttemperatur von 65°C im Kern, wird der Rohling (in Donutform) dem Ölbad entnommen (zur Herstellung eines Tiefkühlproduktes nach ca. 3 min je nach Leistung der Fritteuse).

Das Produkt wird gekühlt/ tiefgekühlt und verpackt.

### Aufbereitung des frittierten Kloßdonuts durch eine Fritteuse

Tiefkühlprodukt bei 150 bis 175°C 3-4 Minuten frittieren.

### Aufbereitung des frittierten Kloßdonuts durch Aufbacken

Tiefkühlprodukt bei 220°C 18-20 Minuten im Backofen je Geräteeinstellung backen.

### Erfindungsgemäßes Herstellungsverfahren mittels Kombidämpfer oder Spiralofen

Die Kartoffelmasse wird in der nötigen Konsistenz hergestellt.

Die Kartoffelmasse wird gekühlt verarbeitet.

Die Kartoffelmasse wird bemehlt oder unbemehlt in eine (Donut-)Form gegeben und wahlweise darin belassen oder wieder entnommen.

Die Masse wird mit/ohne Form in einen Kombidämpfer oder Spiralofen gegeben.

Der Kombidämpfer oder Spiralofen wird mit dem Heißdampfverfahren auf 130°C und einer ca. 60%igen Wasserdampfsättigung für 4 min eingeschaltet.

Die vollständige Verkleisterung wird mit einer Kerntemperatur von 65°C erreicht.

Die Panierung erreicht einen ähnlichen knusprigen Oberflächeneffekt wie beim Frittieren.

Das Produkt wird aus dem Kombidämpfer entnommen und nach einer ausreichenden Abkühlung auf ca. 40°C aus der Form entfernt.

Das Produkt kann nun gekühlt/tiefgekühlt verpackt werden.

### Aufbereitung des mittels Heißdampfverfahren hergestellten Kloßdonuts durch eine Fritteuse

Tiefkühlprodukt bei 175°C 3-4 Minuten frittieren.

### Aufbereitung des mittels Heißdampfverfahren hergestellten Kloßdonuts durch Aufbacken

Tiefkühlprodukt bei 220°C 18-20 Minuten je Geräteeinstellung backen.

Das Kartoffelpüree (zerstampfte Kartoffeln) kann unter Zugabe eines rohen Kartoffelanteils in Verbindung mit Kartoffelmehl (Stärke) unter besonderen Voraussetzungen formbar und ohne besonderen Qualitätsverlust nach dem Tiefkühlvorgang aufgetaut werden. Dabei ist der rohe Kartoffelanteil naturell in geriebener Form (2-5 mm) oder aus einer industriell gewonnenen Kartoffelfaser von Nöten. Diese Mischung ergibt durch ein manuelles Pressen bzw. industrielles Strangpressverfahren bei einer Temperatur zwischen 4 und 15°C einen geformten Rohling mit einem mindestens 2 bis maximal 5 cm starken Teigdurchmesser. Das entstandene Zwischenprodukt wird anschließend je nach Form und Teigdurchmesser für Vergleichszwecke einem ersten Frittiervorgang bei 150-160°C für 2-3 Minuten unterzogen. Danach kann das Endprodukt in die Tiefkühlung oder nach einem zweiten Frittiervorgang von 3-4 Minuten zum Verzehr angeboten werden.

Erfindungsgemäß ist für gewerbliche Zwecke das Heißdampfverfahren (Kombidämpfer) anstelle des ersten Frittiervorganges vorteilhaft. Als Richtwert können hierbei ca. 90 Sekunden je 1 cm Teigdurchmesser bei 130°C zum Erreichen einer notwendigen Kerntemperatur von 65°C zur vollständigen Durchkleisterung angenommen werden. Allerdings gilt es die Form des Produktes und den Formgeber zu beachten. Beispielsweise wird unter Nutzung einer Silikonform aufgrund der verringerten Wärmeleitfähigkeit die doppelte Zeit benötigt.

Der Rohling ist nach einer entsprechenden Abkühlung (ab ca. 40°C) formstabil und kann für den Endverbraucher, paniert oder unpaniert, in der Kühlung/Tiefkühlung aufbewahrt werden. Dadurch wird eine verlängerte Haltbarkeit des Produktes gewährleistet.

Das Herstellungsverfahren bietet als gekühlter/tiefgekühlter Rohling für den Gastronomiebetrieb und den privaten Endverbraucher ästhetische (Formvielfalt), zeitliche, energiesparende und gesundheitsfördernde Vorteile.

Nach oben beschriebenem Verfahren benötigt ein Endverbraucher beispielsweise bei einem 90g geformten Donut eine Zubereitungszeit von ca. 3 Minuten bei 175°C in der Fritteuse. Anschließend kann ein Kloßgericht, zum Beispiel durch eine mittige Anrichtung auf dem Teller mit geräuchertem Lachs an Meerrettich und Dill, in kürzester Zeit servierfertig gestaltet werden. Die bisherigen Zubereitungszeiten liegen zwischen 18-30 Minuten unter Zuhilfenahme eines vorbereiteten, tiefgekühlten Kloßes. Bei Frischzubereitung muss ein weiterer Zeitaufwand einberechnet werden.

Andernfalls ist die Aufbereitung des Rohlings im Backofen möglich. Beispielsweise kann ein Kinderkloß in Form eines Dinosauriers (ca. 90g) bei 200°C für 15-18 Minuten gebacken und anschließend serviert werden.

Erwähnenswert ist außerdem, dass der erfindungsgemäße Kloß beziehungsweise das erfindungsgemäße Kartoffelformteil in Form durch seine verdichtete Oberfläche das Nahrungsmittel länger warmhält.

Durch die Zugabe von Kartoffelfasern (natürlicher oder industrieller Ursprung), die einer erhöhten Druckkraft bei einer entsprechenden Teigtemperatur ausgesetzt werden, erreicht man die gewünschte Formgebung. Der darauffolgende Erhitzungsvorgang bildet unter Wasserentzug und Stärkeverhärtung ein stabiles Außengerüst. Im Inneren des Rohlings aktiviert sich ab einer Temperatur von 62,3°C die Netzwerkstruktur, welche durch den Rohkartoffelanteil von 20-50% gewonnen wird. Das bedeutet, dass enthaltene Stärkekörner aufquellen, platzen und sich verflüssigen. Dies führt zu einer Verkleisterung der Kartoffelfasern, sodass eine formstabile innere Struktur erreicht wird. Unterstützend für die Verfestigung des Rohlings ist ein Wasserverlust während des Herstellungsprozesses (Gewichtsverlust ca. 10%).

Beim Heißdampfverfahren muss der Teig nicht gekühlt verarbeitet werden. Die Gardauer eines aus dem Teig hergestellten Rohlings hängt naturgemäß von der Form und Stärke des Rohlings ab. Dieser kann mit oder ohne eine Form (Metall, Silikon) gegart werden.

Die Temperatur liegt während der Bedampfung mit 60% bis 80 % Wasser-Sättigung zwischen 120 und 150°C. Die Bedampfung erfolgt solange bis eine Kerntemperatur des Produkts von mind. 65°C erreicht ist. Durch den zugeführten Wasserdampf liegt der Wasserverlust des Produkts bei 2 Gew.-%.

Eine Austrocknung und Erhärtung des verkleisterten Rohlings bleibt somit aus.

Ein Wasserverlust mit resultierender Verfestigung erfolgt bei diesem Verfahren während des anschließenden Auskühlvorganges (Gewichtsverlust ca. 6%).

Die Auskühlung erfolgt bei einer Temperatur von ca. -40°C für 15 min im Schockfroster. Dadurch wird eine Kerntemperatur von +1°C und eine Außentemperatur (Oberflächentemperatur) von -1°C des Rohlings erreicht. Abschließend erfolgt eine Verpackung des Produkts. Das Produkt gleicht sich in der Verpackung der gewünschten Transport- und Lagertemperatur von ca. 4 bis 7°C an.

Ein Kloßherz mit 90 g, einer Stärke von 3,5cm und 6cm Außendurchmesser wird durch eine Trommelformmaschine oder Formplattenmaschine gepresst, danach in einen Spiralkocher oder Kombidämpfer bei 125°C mit 65 % Wasserdampfgehalt 8 min auf eine Kerntemperatur von ca.80 Grad erhitzt. Es wird ein Gewichtsverlust von 2% festgestellt. Dann erfolgt eine Kühlung bei ca. -40°C durch einen Schockfroster bis zum Erreichen der Innentemperatur des Produktes von +1°C und der Außentemperatur von -1°C Verpackt. Es erfolgt die Verpackung.

## Patentansprüche

1. Verfahren zur Herstellung eines Kartoffelformteils aufweisend die folgenden Schritte in der angegebenen Reihenfolge:
a) Bereitstellen einer Kartoffelrohmasse, aufweisend alle Teile von rohen, geschälten und zerkleinerten Kartoffeln und/oder eines technisch bereiteten Äquivalents ausgewählt aus Kartoffelmehl, Stärkemehl, Kartoffelfasern oder getrocknetem Kartoffelpüree,
b) Bereitstellen einer Kartoffelmasse, umfassend gekochte, geschälte und zerkleinerte Kartoffeln und/oder eines technisch bereiteten Äquivalents ausgewählt aus Kartoffelmehl, Stärkemehl, Kartoffelfasern oder getrocknetem Kartoffelpüree,
c) Vermengen der beiden Massen zu einer Mischung,
d) Kühlen der Mischung auf eine Temperatur von 4 - 15°C,
e) Ausformen eines Formteils aus der gekühlten Mischung,
f) thermisches Behandeln des Formteils mittels eines Heißdampfverfahrens zum Erreichen einer Kerntemperatur im Formteil von mindestens 65°C, wodurch eine Verkleisterung von Kartoffelstärkebestandteilen erreicht wird, so dass ein Wassergehalt im Formteil nach der thermischen Behandlung abnimmt und ein Rohling entsteht.

2. Verfahren nach Anspruch 1, wobei das Heißdampfverfahren in Schritt f) mittels eines Kombidämpfers oder Spiralkochers erfolgt.

3. Verfahren nach einem der vorhergehenden Ansprüche, wobei die Kartoffelrohmasse einen Anteil im Bereich von 10 bis 75%, bevorzugt im Bereich von 10 bis 55% und insbesondere im Bereich von 20 bis 50% an der Mischung aufweist.

4. Verfahren nach einem der vorhergehenden Ansprüche, weiter aufweisend einen Schritt g) in welchem der Rohling mittels Wärmeeinwirkung, insbesondere mittels Frittierens, Backens, Toastens oder im heißen Wasserbad, behandelt wird, um ein verzehrfertiges Produkt bereitzustellen

5. Verfahren nach Anspruch 4, wobei die Wärmeeinwirkung für einen Zeitraum von 3 bis 10 min erfolgt.

6. Verfahren nach einem der vorhergehenden Ansprüche, wobei das Formteil eine Dicke im Bereich von 1 bis 5 cm aufweist.

7. Verfahren nach einem der Ansprüche 4 bis 6, wobei das Frittieren in Schritt g) bei einer Temperatur im Bereich von 140 bis 170°C, insbesondere im Bereich von 150 bis 160°C und/oder für eine Zeitspanne im Bereich von 1,5 bis 4 min, insbesondere 2 bis 3 min erfolgt.

8. Verfahren nach einem der vorhergehenden Ansprüche, wobei das Formteil nach Schritt e) vor der Weiterverarbeitung bemehlt wird.

## Claims

1. A method for producing a molded potato product, comprising the following steps in the indicated order
a) providing a raw potato mass comprising all parts of raw, peeled and chopped potatoes and/or of a technically prepared equivalent selected from potato flour, starch flour, potato fibres or dried mashed potatoes,
b) providing a potato mass comprising cooked, peeled and chopped potatoes and/or of a technically prepared equivalent selected from potato flour, starch flour, potato fibres or dried mashed potatoes,
c) blending the two masses to form a mixture,
d) cooling the mixture to a temperature of 4 - 15 °C,
e) shaping a molded product from the cooled mass,
f) thermally treating the molded product by means a superheated steam method to achieve a core temperature in the molded product of at least 65°C, whereby a gelatinization the potato starch components is caused, so that the water content in the molded product decreases after heat treatment and a blank is produced.

2. The method according to claim 1, wherein the thermal treatment in step f) is carried by means of a combi-steamer or spiral stove.

3. The method according to any one of the preceding claims, wherein the potato raw mass has a proportion in the range from 10 to 75 %, preferably in the range from 10 to 55 % and in particular in the range from 20 to 50 % of the mixture.

4. The method according to any one of the preceding claims, further comprising a step g) in which the blank is revived by heat application, in particular by means of deep-frying, baking, toasting or in a hot water bath, in order to provide a ready-to-eat product.

5. The method according to claim 4, wherein the heat application takes place for a duration of 3 to 10 min.

6. The method according to any one of the preceding claims, wherein the molded potato product has a thickness in the range from 1 to 5 cm.

7. The method according to one of claims 4 to 6, wherein the deep-frying in step g) is carried out at a temperature in the range from 140 to 170 °C, in particular in the range from 150 to 160 °C and/or for a period of time in the range from 1.5 to 4 min, in particular 2 to 3 min.

8. The method according to any one of the preceding claims, wherein the molded product after step e) is floured before further processing.

## Revendications

1. Procédé de fabrication d'une pièce moulée à base de pommes de terre, présentant les étapes suivantes dans l'ordre indiqué :
a) la fourniture d'une masse crue de pommes de terre, présentant toutes les parties de pommes de terre crues, épluchées et hachées et/ou un équivalent techniquement préparé choisi parmi la farine de pommes de terre, la fécule, les fibres de pommes de terre ou la purée de pommes de terre séchée,
b) la fourniture d'une masse de pommes de terre, comprenant des pommes de terre cuites, épluchées et hachées et/ou un équivalent techniquement préparé choisi parmi la farine de pommes de terre, la fécule, les fibres de pommes de terre ou la purée de pommes de terre séchée,
c) le mélange des deux masses pour former un mélange,
d) le refroidissement du mélange à une température de 4 à 15 °C,
e) le démoulage d'une pièce moulée à partir du mélange refroidi,
f) le traitement thermique de la pièce moulée au moyen d'un procédé à la vapeur surchauffée pour atteindre une température à cœur dans la pièce moulée d'au moins 65 °C, ce qui permet d'obtenir une gélatinisation des constituants d'amidon de la pomme de terre, de telle sorte qu'une teneur en eau dans la pièce moulée diminue après le traitement thermique et qu'une ébauche est produite.

2. Procédé selon la revendication 1, dans lequel le procédé à la vapeur surchauffée de l'étape f) est effectué au moyen d'un cuiseur à vapeur combiné ou d'un cuiseur en spirale.

3. Procédé selon l'une quelconque des revendications précédentes, dans lequel la masse crue de pommes de terre représente une proportion du mélange dans la plage de 10 à 75 %, de préférence dans la plage de 10 à 55 %, et notamment dans la plage de 20 à 50 %.

4. Procédé selon l'une quelconque des revendications précédentes, présentant en outre une étape g) dans laquelle l'ébauche est traitée par action de chaleur, notamment par friture, cuisson au four, grillage ou bain d'eau chaude, afin de fournir un produit prêt à être consommé.

5. Procédé selon la revendication 4, dans lequel l'action de chaleur est effectuée pendant une période de 3 à 10 minutes.

6. Procédé selon l'une quelconque des revendications précédentes, dans lequel la pièce moulée présente une épaisseur dans la plage de 1 à 5 cm.

7. Procédé selon l'une quelconque des revendications 4 à 6, dans lequel la friture à l'étape g) est effectuée à une température dans la plage de 140 à 170 °C, notamment dans la plage de 150 à 160 °C et/ou pendant une durée dans la plage de 1,5 à 4 minutes, notamment de 2 à 3 minutes.

8. Procédé selon l'une quelconque des revendications précédentes, dans lequel la pièce moulée est farinée après l'étape e) avant le traitement ultérieur.
